# EUROPEAN PATENT SPECIFICATION

(11) **EP 2 362 066 B1**
(45) Date of publication and mention of the grant of the patent: **27.01.2016**
(21) Application number: 11250225.7
(22) Date of filing: 28.02.2011
(51) Int. Cl.: F01D 5/14, F02K 3/04

(54) **Hollow fan blade**
Hohle Fanschaufel
Aube de soufflante creuse

(30) Priority: 26.02.2010 US 713944
(43) Date of publication of application: 31.08.2011
(73) Proprietor: United Technologies Corporation, Hartford, CT 06101 (US)
(72) Inventor: Deal, James L., Hebron, CT 06248 (US); Weisse, Michael A., Tolland, CT 06084 (US); Graves, William R., Manchester, CT 06042 (US)
(74) Representative: Hall, Matthew Benjamin

(56) References cited:
- US-A- 3 695 778
- US-A- 5 141 400
- US-A- 5 411 370
- US-A1- 2007 084 527
- US-A1- 2007 243 069

## Description

### BACKGROUND

Titanium alloys and fiber composites are the benchmark classes of materials for fan and compressor blades in commercial airline engines. One reason for the materials being so broadly adopted is that regulations require an engine in commercial service to be capable of ingesting a medium-sized bird while allowing for continued operation or safe and orderly shutdown of that engine. Another reason is that the blades must resist cracking from nicks and dents caused by small debris such as sand and rain. Engines with titanium fan blades as well as certain reinforced fiber composite fan blades are the only ones that currently meet these criteria.

While titanium blades are relatively strong and light in weight, composite blades offer sufficient strength and a significant weight savings over titanium. However, composite blades do not scale well to smaller engine applications and the costs are several times those of already expensive titanium blades. Both titanium and fiber composite raw materials are also expensive to process. These blades often require expensive specialized equipment to process the material into an aerodynamic shape that maintains strength while keeping weight to a minimum. Further, due to their relatively low strain tolerance, composite blades require a greater thickness than otherwise equivalent metal blades to meet bird strike requirements: Greater blade thickness reduces fan efficiency and offsets a significant portion of weight savings from using composite materials.

Both solid and hollow blades made from titanium or titanium alloys, such as Ti-6Al-4V alloys, have been proven to offer sufficient hardness to resist erosion and foreign object damage and be certified for commercial service. However, diminishing returns are seen with these hollow blades as the cavities become smaller and approach the required thickness of the airfoil surfaces. Further, hollow blades are costly to produce using current techniques, particularly in the case of titanium, where expensive processes such as diffusion bonding are usually necessary to join two sheets together into a single hollow structure. Other less costly processes do not reliably produce the desired results without introducing unwanted stresses or weakening the blade in key areas.

US 3 695 778 A describes a hollow metal blade, with a composite skin covering bonded on the outside using an adhesive.

### SUMMARY

A blade includes a root; an airfoil connected to the root and formed from a first metallic material having first and second major surfaces, the first metallic material being an aluminum alloy; an internal cavity with an opening formed only in the first major surface; a plurality of ribs extending through a depth of the cavity; metallic foam filler disposed through the depth of the cavity; a socket formed around the opening; a cover received in the socket and covering the opening to enclose the cavity, the plurality of ribs and the metallic foam filler; and an adhesive bonding the cover to the socket, the plurality of ribs and the metallic foam filler; characterised in that the cover is metallic; and the adhesive is polyurethane-based to provide force damping between the cover and the airfoil.

A method for making a blade includes forming a solid airfoil and a cover from a first metallic material, wherein the first metallic material is an aluminium alloy; forming an opening, a socket, and a cavity in a first major surface of the airfoil; forming a plurality of ribs extending through a depth of the cavity; filling a depth of the cavity with metallic foam filler; adhesively bonding the cover to the socket, the plurality of ribs and the metallic foam filler, thereby enclosing the cavity, the plurality of ribs and the metallic foam filler within the airfoil, wherein the adhesive bonding uses a polyurethane-based adhesive to provide force damping between the cover and the airfoil; and machining the airfoil into a final blade shape.

### BRIEF DESCRIPTION OF THE DRAWINGS

FIG. 1 schematically depicts a cross-section of a typical turbine engine.
FIG. 2A is a side view of a hollow blade used in the engine of FIG. 1.
FIG. 2B is a cross-section taken along line 2B-2B in FIG. 2A.
FIG. 2C shows a magnified view of a portion of FIG. 2B.
FIG. 3A is a side view of an airfoil blank used to make a hollow blade.
FIG. 3B shows the airfoil blank of FIG. 3A including a cavity, a socket, ribs, filler material, and a sheath attachment surface.
FIG. 3C is an exploded view of the hollow blade of FIG. 2A.
FIG. 4 is a flowchart detailing the steps for making a hollow airfoil.

### DETAILED DESCRIPTION

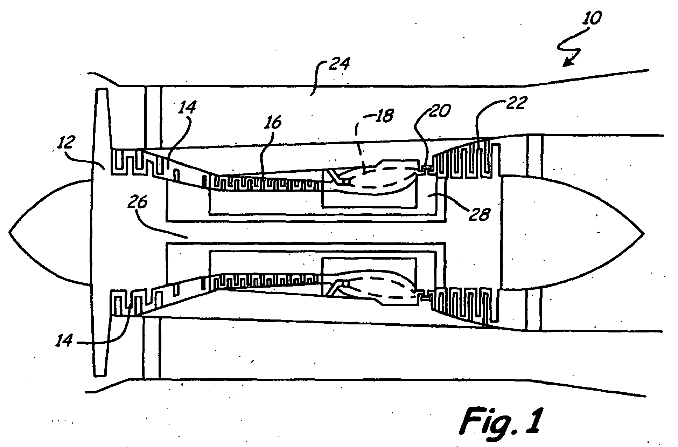

An example dual-spool turbofan engine is depicted in FIG. 1. Turbofan engine 10 comprises several sections: fan section 12, first low-pressure compressor section 14, second high-pressure compressor section 16, combustor section 18, first high-pressure turbine section 20, second low-pressure turbine section 22, bypass section 24, low-pressure shaft 26, and high-pressure shaft 28. A portion of the atmospheric air pulled in by rotation of fan section 12 is directed toward first compressor section 14, while the remainder is directed through bypass section 24. Air directed through first compressor section 14 is further compressed by second compressor section 16. Fuel is added and ignited in combustor section 18. Blades in turbine sections 20 and 22 capture a portion of the energy from passing combustion products by turning turbine rotors. Both fan section 12 and compressor section 14 are rotatably linked via low-pressure shaft 26 to first low-pressure power turbine section 22. Second high-pressure compressor section 16 is rotatably connected to first high-pressure turbine section 22 via high-pressure shaft 28. Thrust is generated in engine 10 by the remaining atmospheric air drawn in by fan section 12 and forced through bypass section 24, as well as by the force of exhaust gases exiting from second low-pressure turbine 22.

In a turbo fan engine, lighter components generally lead to more efficient performance. If less energy is expended moving internal engine parts, more energy is available for useful work. At the same time, the components themselves must be strong enough to withstand forces typical for the operating environment and performance envelope. Safety considerations based on the frequency and/or severity of possible failure will often dictate that the engine components also be able to withstand certain atypical, yet foreseeable events as well. Because stronger components are often heavier and/or more expensive, a balance must be struck between efficiency, safety, and cost.

Few locations in an aircraft are more representative of efforts to optimize the balance between efficiency, safely, and cost than engine 10. While lighter materials are preferable to improve efficiency, the high risk of severe consequences from engine damage will require that engine 10 be made of components having additional margins of safety. Combining parts having both high strength and low density greatly restricts material choices and increases costs. Not infrequently, processing these strong and light materials including fiber composites and titanium is also complex and expensive, such as in hollow blades formed by diffusion bonding two machined plates or two forged halves together.

One alternative to diffusion bonding for creating hollow blades includes welding a cover onto a partially hollowed out blank. However, a welded cover has several shortcomings in complexity and reproducibility of the weld, as well as in the blade's ability to resist damage. The following figures depict hollow blades with a bonded cavity cover adapted for use in a turbo fan engine, such as engine 10 of FIG. 1.

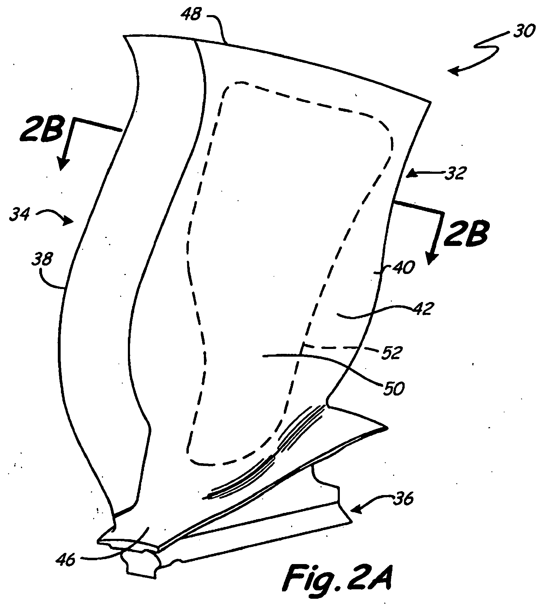

Hollow blade 30 is shown in FIG. 2A comprising airfoil 32, sheath 34, and root 36. Blade 30 includes leading edge 38, trailing edge 40, suction surface 42, pressure surface 44 (not visible in FIG. 2A), platform 46, tip edge 48, cavity cover 50, and socket 52. Airfoil 32 is a hollow aerodynamic structure described in further detail below. Pressure surface 44 is a major surface opposite major suction surface 42. In this example, sheath 34 covers a portion of suction surface 42 and a portion of pressure surface 44, proximate leading edge 38.

Root 36 links blade 30 at platform 46 to a disk or rotor (not shown) in fan section 12. The disk is connected, either directly or through a gear train, to low-pressure shaft 26 powered by low-pressure turbine section 22 as shown in FIG. 1. Here root 36 is shown as a "dovetail" root; however such an arrangement is not required for the present invention. Alternatively, blade 30 can have a different configuration of root 36, or root 36 can be incorporated with the disk in what is known as an integral rotor blade configuration.

Leading edge 38 and trailing edge 40 extend generally spanwise in a curved manner from platform 46 to tip edge 48. Air flows chordwise from leading edge 38 over major surfaces suction surface 42 and pressure surface 44, and converges at trailing edge 40.

Platform 46 provides an inner flow path to direct incoming air over suction surface 42 and pressure surface 44, and away from the rotor (not shown) proximate root 36. In FIG. 2A and several subsequent figures, platform 46 is shown to be integrated with airfoil section 32. Alternatively, platform 46 can be fabricated and attached separately to airfoil section 32 or attached directly to the rotor.

Blade 30 also includes cavity cover 50 and socket 52 on suction surface 42. Socket 52 is represented by the dashed line on suction surface 42 but is hidden from view by cover 50. Cavity cover 50 engages with socket 52, covering an opening and completing a continuous first surface of blade 30. Here, the first surface is suction surface 42. Socket 52 is disposed around an opening in suction surface 42 leading to cavity 54 (not shown in FIG. 2A), located within the interior volume of blade 30. Cover 50, socket 52, and cavity 54 are described in more detail below.

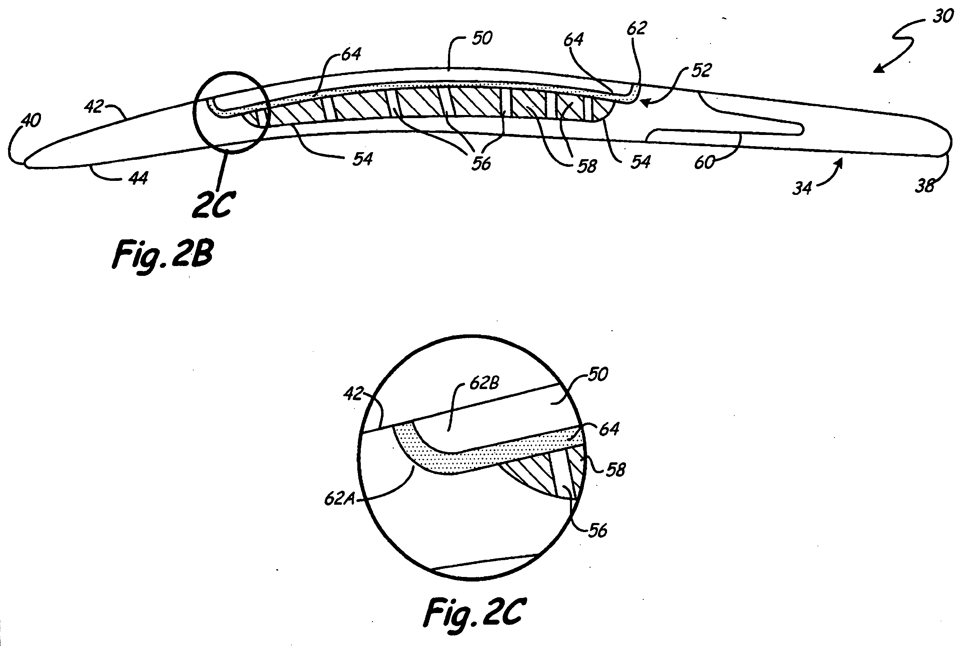

Additional elements of blade 30 are shown in the cross-section view of FIG. 2B, taken along line 2B-2B of FIG. 2A. In addition to the elements of blade 30 visible in FIG. 2A, FIG. 2B also shows pressure surface 44, cavity 54, internal support ribs 56, filler material 58, sheath attachment surface 60, lap sections 62A and 62B, and adhesive 64. For ease of illustration and description of these other elements of blade 30, FIG. 2B depicts blade 30 viewed toward platform 46 from tip edge 48 and is arranged to show suction surface 42 on the top of the figure. As such, sheath 34 is now seen on the right side of the figure with cavity cover 50 engaged in socket 52. A magnified view of a portion of blade 30 with cover 50 adhesively bonded in place is seen in FIG. 2C.

Cavity 54 is located between suction surface 42 and pressure surface 44. Support ribs 56 are disposed within cavity 54. Filler material 58 is disposed within cavity 54, typically between ribs 56. Sheath attachment surface 60 is shown here to be proximate leading edge 38 between sheath 34 and airfoil 32. Lap sections 62A and 62B define a lap joint for cover 50. Adhesive 64 bonds cover 50 to airfoil 32. FIG. 2C includes these same elements in a magnified view.

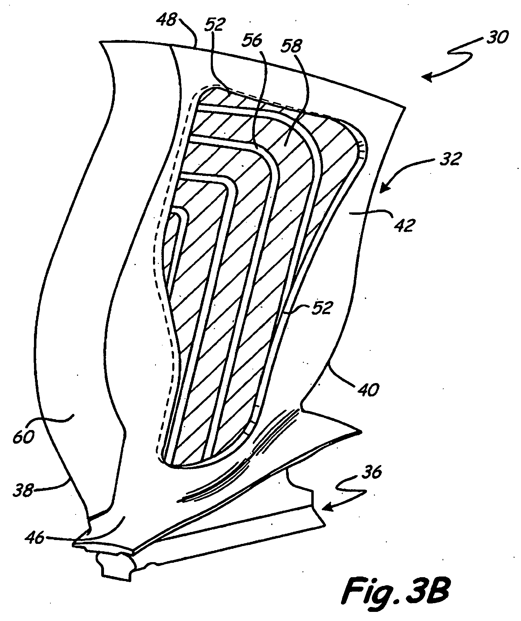

Cavity 54 is a hollow section of blade 30 located within airfoil 32 between the two major surfaces, suction surface 42 and pressure surface 44. Specific dimensions and alignment of cavity 54 within blade 30 are included below with respect to FIG. 3B. Regardless of size or alignment, one method of forming cavity 54, is to remove material (e.g., by machining) from a major surface of airfoil portion 32, like suction surface 42.

An opening provides access to cavity 54 and occupies a given surface area on suction surface 42. Around the perimeter of this opening, socket 52 is formed, again, for example, by machining. Socket 52 engages and structurally supports cover 50, so that cavity 54 is enclosed on all sides. Socket 52 can be defined by a variety of surfaces extending around the opening, such as lap section 62A.

Lap section 62A is the bottom half of a lap joint, with the other top half, lap section 62B being disposed on the inner surface of cover 50 around its perimeter. Lap section 62A extends around the perimeter of cavity 54 and structurally supports lap section 62B of cover 50. Alternatively, socket 52 is one or more lips, ridges, notches, or other engagement surfaces. Regardless of its form, socket 52 is formed with rounded edges to avoid sharp corners and other stress concentrators.

In some embodiments of lap section 62A, its dimensions will substantially match those of lap section 62B on cover 50. In these embodiments, lap sections 62A and 62B are each slightly less than half of the total thickness of cover 50 as described below due to the inclusion of adhesive 64 between lap sections 62A and 62B. In some embodiments, the length of lap sections 62 are between about 7 and about 14 times the overall thickness of cover 50. In other embodiments, the length of lap sections 62 are about 10 times the thickness of cover 50.

In FIG. 2B, cover 50 is a curved sheet with a substantially uniform thickness over its chordwise dimension, except around its perimeter. The curvature of cover 50 is shaped to form a substantial portion of suction surface 42. The thickness of cover 50 is also sized to withstand anticipated vibratory stresses and potential foreign object damage.

In some embodiments, cover 50 has a thickness in the main portion between about 2.5 mm (0.10 inches) and about 14 mm (0.55 inches). In other embodiments, cover 50 has a thickness between about 5.0 mm (0.20 inches) and 11 mm (0.45 inches). In yet other embodiments, cover 50 has a thickness between about 8 mm (0.30 inches) and about 9 mm (0.35 inches). Alternatively, cover 50 can be made with varying thickness across the chordwise dimension, either during its fabrication, or during finish machining of blade 30.

As seen here, cover 50 also has lap section 62B around its perimeter on its cavity facing surface. Lap section 62B on cover 50 is complementary to lap section 62A and engages socket 52 as shown. Together, both sections 62 allow cover 50 to engage with airfoil portion 32. The thickness of cover 50 in lap section 62B is about half of the thickness of cover 50 in the main section. This relative thickness, however, must also be adjusted for the thickness of adhesive 64 and the thickness of lap section 62A to ensure a substantially even suction surface 42.

As seen in FIG. 2B, cavity cover 50 is bonded via adhesive 64 to airfoil 32 at socket 52. When adhesive 64 is placed and cured between sets of ridges 62, cover 50 permanently covers the opening surrounded by socket 52, and encloses cavity 54 and any elements disposed therein, such as ribs 56 and filler 58.
Loads of varying magnitude and direction are distributed throughout blade 30 during operation of engine 10, particularly over pressure surface 44. Small foreign object impacts occur on this surface as well as continuous vibratory stresses from high pressure airflow. Cover 50 can withstand many of these forces by transmitting them through socket 52 into the body of blade 30. However, in the event of a bird strike proximate suction surface 42, cover 50 and socket 52 experience a great amount of shear.

With a welded cover, these forces are transmitted from the cover through the weld bead to the blade. While the weld bead is typically stronger than the materials it is joining, welding has several shortcomings. Many conventional welding processes produce excess heat, causing thermal distortion in the surrounding metal. The excess heat plastically deforms the metal beyond the targeted area and weakens the microstructure surrounding the bead.

Welding also generates high mechanical stresses and introduces defects into the blade even in advanced welding processes with better heat control like fusion welding. These mechanical stresses can cause permanent deformation of blades, as well as potentially any surrounding ribs or filler. The areas adjacent to the weld bead are prone to crack initiation unless the depth of the bead matches the thickness of the cavity cover over the entire blade.

In contrast, adhesive bonding of cover 50 to socket 52 avoids the heat and mechanical stresses inherent in welding. Unlike welding, adhesive 64 does not require heat or mechanical stress beyond that needed for curing, which in many embodiments will not exceed about 204° C (400° F) and about 1.0 MPa (150 psi). Also, welding affects the microstructure of ribs 56 if done too close, whereas adhesive bonding does not, allowing ribs 56 to extend through the entire volume of cavity 54. Further, welding also has its bonding area limited to the regions immediately surrounding socket 52. In addition, a weld bead does not provide force damping for vibratory stresses and foreign object impacts between cover 50 and airfoil 32.

When a relatively large foreign object strikes hollow blade 30 proximate cover 50, forces are transmitted through socket 52 and adhesive 64. In addition to foreign objects, blade 30 experiences significant vibratory stresses from the passing air and from operation of the surrounding engine components. If the total bonding area on socket 52 is not large enough to sufficiently spread and withstand these lateral forces and vibratory stresses, the bond may fail. Increasing the relative width of socket 52 is one option to increase bonding area. Another option is to increase and take advantage of the amount of available bonding area within cavity 54 by including ribs 56 and filler 58.

If the area of socket 52 is relatively small, the correspondingly small amount of adhesive 64 can be insufficient and fail under the shear caused by the force of the foreign object. As shown in FIGS. 2B-2C, cavity cover 50 is bonded to ribs 56 and filler material 58, located within cavity 54. This bond helps socket 52 resist shear forces by increasing the bonding area of cover 50.

By adhesively bonding cover 50 to ribs 56 in addition to socket 52, the risk of failure due to a foreign object strike or operational fatigue proximate the bonding area is reduced. Ribs 56 are formed on the cavity side of pressure surface 44 and extend through cavity 54 ending approximately at the cavity side of cover 50. Since cover 50 forms a substantial portion of suction surface 42, the cavity side of cover 50 rests on ribs 56 in addition to socket 52, thus providing additional bonding surfaces for cover 50.

Ribs 56 are shown for illustration and ease of description in FIG. 2B as substantially parallel and equidistant structures, but can take any form throughout cavity 54. Different types of hollow blades typically contain a plurality of ribs 56 within cavity 54. Ribs 56 reinforce suction surface 42, including cavity cover 50, as well as pressure surface 44 through cavity 54. Reinforcement allows these surfaces to be thinner, thus saving weight. The particular design of ribs 56 will be dependent on several factors but will typically be directed toward balancing weight reduction and raw material savings with processing costs. Ribs 56 are described in more detail with respect to FIG. 3B.

In addition to ribs 56, adhesive 64 can also bond cover 50 to filler material 58. Filler material 58 offers an additional or alternative way of creating supplementary bonding area for cover 50. Filler 58 is disposed within cavity 54 and at least partially fills one or more gaps between adjacent ribs 56. In this case, cover 50 is adhesively bonded to at least a part of filler 58. Filler material 58 can provide additional bonding surface when it extends to a depth (in the blade thickness direction) that leaves filler 58 substantially flush with the suction side of ribs 56 (approximately at the cavity side of cover 50). In FIG. 2B, cover 50 is bonded to the entire exposed surface of filler 58.

Filler material 58 is foam or another very lightweight material, several of which can be used in hollow fan blades 30 to provide structural support to suction surface 42 or pressure surface 44. Filler material in some embodiments also provides force damping as described below. One example filler material 58 is a foam comprising aluminum. Another example filler 58 is a foam comprising a 6XXX- or 7XXX-series aluminum alloy.

Such fillers 58 have not previously been used to provide adhesive bonding area for joining cover 50 to the remainder of blade 30. Filler material 58 allows for a greater quantity of adhesive to be used overall in bonding cover 50 because of the additional surface area. Alternatively, the same quantity or volume of adhesive can be spread over the larger area. Because of filler 58, bonding of cover 50 can utilize substantially the entire surface area of the cavity side of cover 50, including any ridges 62. This larger bonding area spreads out the area over which force is transmitted between cover 50 and the remainder of blade 30, reducing the risk that the bond will fail.

In alternative embodiments, there are no ribs 56, or ribs 56 do not extend through the entire depth of cavity 54 between pressure surface 44 and the cavity side of cover 50. In these embodiments, cover 50 is bonded via adhesive 64 solely to socket 52. Alternatively, in yet other embodiments, the adhesive bond of cover 50 to ribs 56 and/or filler 58 is sufficient to reduce or eliminate ridges 62 defining socket 52 as well as any complementary ridges 62 on cover 50.

Adhesive 64 is one that is suitable for metal-to-metal bonding in aviation applications. Several epoxy- and urethane-based adhesives are commercially available and are suitable to bond cover 50 and airfoil 32. In an example of a film-based adhesive, the film is applied along socket 52. Film adhesive 64 is additionally or alternatively applied on the corresponding bonding surface, such as on complementary lap section 62B on the cavity facing side of cover 50.

Examples of suitable epoxy-based adhesives 64 include type EA9628 adhesive available from Henkel Corporation's Hysol Division, Bay Point, Calif. and type AF163K adhesive available from 3M Adhesives, Coatings & Sealers Division, St. Paul, Minn. In the event that filler material 58 is not present in sufficient quantities, or its properties are inadequate to provide desired damping in blade 30 between cover 50 and airfoil 32, an adhesive with additional damping properties can also be utilized.

Adhesive 64 can also be selected to aid in force damping of operational stresses and foreign object strikes while also providing sufficient bonding strength of cover 50. While polyurethane-based adhesives generally provide less bonding strength than epoxy-based adhesives, polyurethane adhesives provide both damping and sufficient bonding strength for hollow blade 30. One example of a suitable polyurethane adhesive 64 is EC-3532B adhesive available from 3M Adhesives, Coatings & Sealers Division, St. Paul, Minn.

Force damping is generally desirable in hollow blades 30 because damping increases the time over which airfoil 30 absorbs and responds to impacts and vibratory stresses, decreasing likelihood of damage or failure. The additional damping provided by adhesive 64 at socket 52 is not available when the cover is welded on because of the mechanical properties of the welded surface. Any damping in a blade with a welded cover must come from filler materials alone.

In some embodiments, the additional bonding strength and reinforcement provided by filler 58 achieves additional weight reduction by replacing some of the solid metal otherwise needed in blade 30. By providing additional reinforcement and bonding area in cavity 54, filler can reduce or eliminate socket 52. Socket 52 can be made to be thinner or be made to protrude into the cavity to a lesser degree. This is possible because various stresses on adhesive 64 around socket 52 are redirected primarily over filler 58 and ribs 56, limiting shear and fatigue. For example, in some embodiments, the magnitude of vibratory stresses on cover 50 can be reduced by about 20% when using a polyurethane-based adhesive 64 over an epoxy-based adhesive 64.

Similarly, the number or size of ribs 56 can be limited, as well as the thickness of major surfaces, pressure surface 44, and as well as suction surface 42. This additional bonding strength and force damping can also allow cover 50 to be made thinner, offering additional weight savings in blade 30. Therefore, bonding cover 50 to filler 58 and ribs 56 offers a potential overall weight savings despite the added weight of filler material 58.

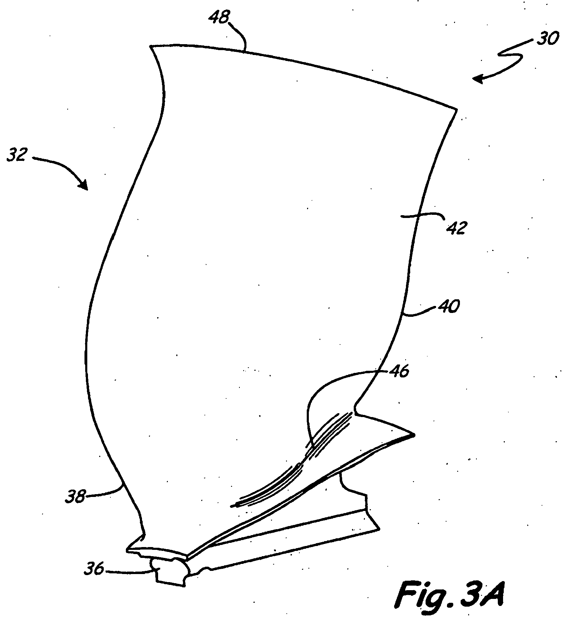

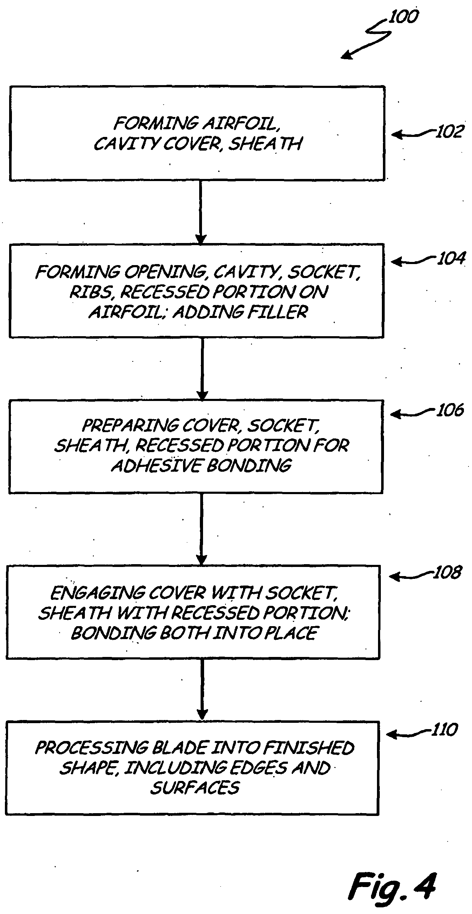

While FIGS. 2B-2C show the details of cover 50 and adhesive 64, FIGS. 3A-3C illustrate additional elements on and around airfoil portion 32 and cavity 54. FIGS. 3A-3C show side views of blade 30 at various stages of production. FIG. 3A depicts blade 30 as a blank of airfoil 32. Blade 30 is still solid in FIG. 3A, and does not yet include cavity 54 and its accompanying elements. At this stage, blade 30 has root 36, leading edge 38, trailing edge 40, suction surface 42, pressure surface 44 (not shown in FIG. 3A), platform 46, and tip edge 48. As in FIG. 2A, pressure surface 44 is not visible because it is opposite suction surface 42. These elements are shown in rough form in FIG. 3A because blade 30 here is a metal blank formed in a general airfoil shape but does not yet have proper surfaces or edges or the parts necessary to put it into service. While the blank for airfoil 32 can be formed in several ways, forging is acceptable, and offers significant cost savings over advanced techniques as described below with respect to FIG. 4.

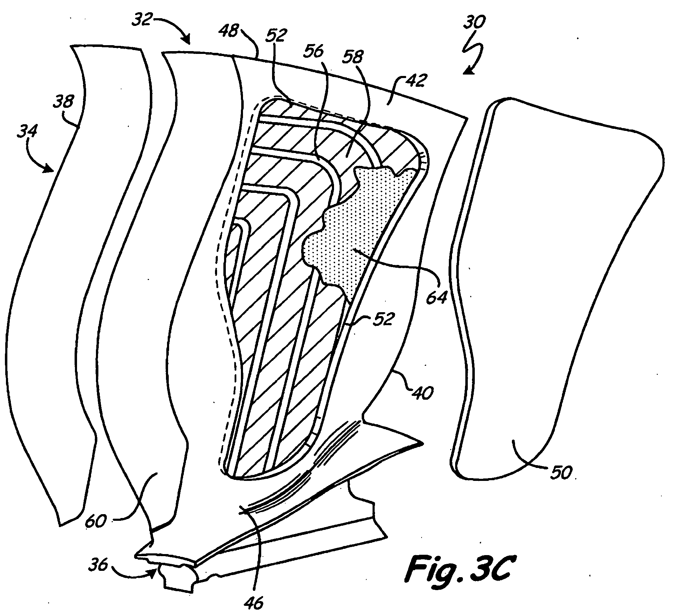

FIG. 3B depicts blade 30 as shown in FIG. 3A with root 36, leading edge 38, trailing edge 40, suction surface 42, pressure surface 44 (not shown in FIG. 3B), platform 46, and tip edge 48. Elements added in FIG. 3B include socket 52, cavity 54, support ribs 56, sheath attachment surface 60, and lap section 62A. Socket 52 is disposed around an opening providing access to cavity 54, and is located on a first surface, such as suction surface 42. Cavity 54 is formed out of a portion of the volume of previously solid airfoil 32. Attachment surface 60 is shown on leading edge 38 and on a portion of suction surface 42 and pressure surface 44 proximate leading edge 38. Surface 60 will be described in more detail with respect to sheath 34 in FIG. 3C.

Support ribs 56 are formed on an internal surface of airfoil 32 defining cavity 54. In certain embodiments, several support ribs 56 extend in multiple directions across the thickness of blade 30, such as is seen here. Cavity 54 appears here as a plurality of subcavities between adjacent ribs 56. In some embodiments, such as is seen in FIG. 3B, ribs 56 extend between more than one edge of cavity 54, causing cavity 54 to be divided into a plurality of smaller cavities. However, as used in this specification, cavity 54 can refer to the overall hollow volume as well as to the plurality of subcavities.

As noted above, cavity 54 improves efficiency of engine 10 by significantly reducing the weight of blade 30. The dimensions of cavity 54 will be determined in part by the overall size of hollow blade 30. Cavity 54 occupies a percentage of the volume occupied by blade 30. For ease of comparison, this percentage includes the overall volume of blade 30 and cavity 54. The volume of blade 30 includes sheath 34 but excludes root 36, and is the volume bounded by leading edge 38, trailing edge 40, suction surface 42, pressure surface 44, platform 46, tip edge 48, and cover 50. The volume of cavity 54 is the total volume once enclosed by cover 50 and excluding ribs 56 and filler material 58.

In this example, cavity 54 is located roughly at the center of the volume occupied by blade 30. In some embodiments, cavity 54 occupies between about 30-70% of the total volume of blade 30. In other embodiments, cavity 54 occupies between about 40-60% of the volume of blade 30. In yet other embodiments, cavity 54 occupies about 50% of the volume of blade 30. These percentages do not equate to total weight savings in blade 30 due to the inclusion of ribs 56, filler 58, and adhesive 64, as well as the potential for different material densities between airfoil 32 and sheath 34 as explained below. However, the percentages represent substantial weight savings over a solid blade due to the lower density of filler 58 and adhesive 64. They also represent weight savings over other hollow blades due in part due to the role of polyurethane adhesive 64 reducing vibratory stresses in blade 30. A significant portion of this weight reduction is in and around cover 50.

On one hand, it is desirable to maximize the size of cavity 54 to reduce the weight of blade 30 and improve efficiency of engine 10. However, suction surface 42 and pressure surface 44 must be able to endure continuous operational vibratory stresses from the force of passing air. Blade 30 also experiences several other types of loading: axial loading during a foreign object impact like a bird strike, centrifugal loading during rotation, and occasional circumferential loading from contact with the engine case during strong crosswinds or after loss of a blade. Blade 30 must also be able to withstand vibratory stresses, including resonant vibrations, as well as forces that tend to untwist blade 30 from its airfoil shape.

As these loads change based on different operating assumptions, the percentage of volume occupied by cavity 54 relative to the entire blade 30 will likely be adjusted to compensate. Specific examples of the dimensions defining cavity 54 will be described in reference to FIG. 3C.

Blade 30 includes a plurality of support ribs 56 disposed on internal surfaces within cavity 54. Ribs 56 can be formed out of airfoil portion 32, for example, by machining during or after forming cavity 54. Ribs 56 increase structural support of blade 30, including suction surface 42 and pressure surface 44. Therefore, ribs 56 also can affect the dimensions of cavity 54.

As described above, ribs 56 extend through cavity 54 supporting both suction surface 42 and pressure surface 44. Between adjacent ribs 56 is filler material 58, also as noted above. Ribs 56 can be arranged in a variety of orientations. Like sheath 34, chordwise ribs between leading edge 38 and trailing edge 40 reinforce blade 30 in the event of a foreign object strike. Longitudinal ribs 56 between platform 46 and tip edge 48 provide stiffness for centrifugal loading. Curved ribs 56 increase the inertia of blade 30 in a given direction to balance and redirect the centrifugal and axial forces experienced along blade 30. Filler material 58 also provides support for major surfaces 42 and 44.

In FIG. 3B, blade 30 also includes sheath attachment surface 60 proximate leading edge 38. Surface 60 is a recessed portion of airfoil 32 for attachment of sheath 34. When sheath 34 is placed over airfoil 32, surfaces of sheath 34 and airfoil 32 are substantially flush and there are minimal gaps or changes in surface elevation chordwise over suction surface 42 and pressure surface 44. The degree to which suction surface 42 and pressure surface 44 are recessed at surface 60 is substantially equivalent to the thickness of sheath 34 described below. The degree of recess of surface 60 or the thickness of sheath 34 also can be adjusted slightly to account for thickness of adhesive 64 or other bonding materials. Surface 60 can be formed, for example, by removing a portion of material from airfoil portion 32, such as by machining.

Some small changes in elevation are acceptable between sheath 34 and airfoil portion 32, so long as blade 30 is later machined or processed to render suction surface 42 and pressure surface 44 flush before blade 30 is placed into service. In the example shown, sheath 34 is to be placed over and proximate leading edge 38. However, in other embodiments, sheath attachment surface 60 will be formed at any location on airfoil portion 32 covered by sheath 34. Examples of sheath 34 are discussed in more detail with reference to FIG. 3C.

FIG. 3C is an exploded view of blade 30. Blade 30, having airfoil portion 32 and sheath 34, includes root 36, leading edge 38, trailing edge 40, suction surface 42, pressure surface 44 (not shown in FIG. 3C), platform 46, tip edge 48, cavity cover 50, socket 52, cavity 54, and support ribs 56, filler material 58, sheath attachment surface 60, lap sections 62A and 62B, and adhesive 64. Sheath 34 covers a portion of airfoil 32 proximate leading edge 38. Filler material 58 is disposed within cavity 54 between ribs 56. Cavity cover 50 engages with socket 52 as described above to enclose cavity 54 and complete suction surface 42. A portion of adhesive 64 is cut away to illustrate ribs 56 and filler 58.

Cover 50 is designed to cover the opening on suction surface 42 and enclose cavity 54 within blade 30. Cover 50 has substantially the same surface area as the opening leading to cavity 54 and forms a substantial portion of suction surface 42. In certain embodiments, cavity cover 50 comprises between about 40%-70% of the surface area of suction surface 42. In other embodiments, cover 50 comprises between about 45%-65% of the surface area of suction surface 42. In yet other embodiments, cover 50 comprises between about 50%-60% of the surface area of suction surface 42.

In certain embodiments, cavity cover 50 is made from the same metallic material as airfoil 32 and engages with socket 52, such as at lap section 62A. In other embodiments, airfoil 32 and cover 50 are not exactly the same alloy, but have similar enough thermal expansion properties to prevent separation or buckling of cover 50 relative to airfoil 32. In one example, the thermal expansion coefficients in the respective materials are no more than about 5% different.

Cavity cover 50, once engaged with socket 52, is bonded to airfoil 32. This is done, for example, by adhesive bonding. In this example, adhesive 64, such as a film or liquid, is placed on one or both of airfoil 32 and cover 50. One or more surfaces will include adhesive 64, including socket 52 located on airfoil 32 and cover 50. Other surfaces, such as ribs 56 that protrude through the entire depth of cavity 54 between suction surface 42 and pressure surface 44 can also include adhesive 64. Alternatively, partial ribs 56 are disposed within cavity 54 on the cavity sides of pressure surface 42 and on cover 50, which, when bonded together, form complete ribs 56 through the entire thickness of cavity 54.

As in FIG. 2B, FIG. 3C shows cover 50 as a sheet of substantially constant thickness that defines the thickness of suction surface 42. The figures also show pressure surface 44 having approximately the same thickness as suction surface 42. In certain embodiments, this thickness is between about 15-35% of the maximum overall thickness of blade 30, leaving cavity 54 to occupy between about 30-70% of the overall blade thickness. In other embodiments, this thickness is between about 20-30% of the maximum overall thickness of blade 30, leaving cavity 54 to occupy between about 40-60% of the overall blade thickness. In yet other embodiments, this thickness is about 25% of the maximum overall thickness of blade 30, leaving cavity 54 to occupy between about 50% of the overall blade thickness. Either suction surface 42 (primarily via cover 50) can be thicker than pressure surface 44 or vice versa. This can be done, for example, to selectively reinforce a portion of that thicker surface against foreign object damage.

In addition to altering the thickness, the location and relative dimensions of cavity 54 can be changed to account for different risks of damage from axial loading. For example, cavity 54 can be fine-tuned in the chordwise dimension proximate leading edge 38 and trailing edge 40.

Referring back to the cross section of blade 30 in FIG. 2B, cavity 54 has a chordwise dimension less than the overall chord wise length of blade 30. In several embodiments, this dimension of cavity 54 is between about 35-65% of an average chordwise length of blade 30. In other embodiments, this dimension of cavity 54 is between about 40-60% of an average chordwise length of blade 30. In yet other embodiments, this dimension of cavity 54 is between about 45-55% of an average chordwise length of blade 30.

This relative percentage can vary across different cross-sections in different spanwise locations of blade 30. The total chordwise length of blade 30 varies along the span of blade 30 to optimize aerodynamic performance. Thus even a substantially constant chordwise dimension will yield a variety of relative percentages throughout cavity 54. However, the maximum chordwise dimension of cavity 54 is not always constant, which also affects these relative percentages. For example, cavity 54 can be located closer to trailing edge 40 than to leading edge 38. This is done to provide additional solid material proximate leading edge 38, due to the greater frequency of foreign object strikes compared to trailing edge 40.

In addition to axial load resistance, cavity 54 can also be optimized to reinforce blade 30 against anticipated centrifugal loads proximate platform 46. Referring again to FIG. 3B, a larger solid region of blade 30 proximate platform 46 reinforces the connection to root 36 and the central disk (not shown). This adjustment would be seen in a cross-section similar to FIG. 2B taken proximate platform 46 where cavity 54 represents a smaller fraction of blade 30. One or both of the chordwise dimension and the thickness direction can be adjusted to accomplish this. In other embodiments, blade 30 instead has a greater overall thickness proximate platform 46 to support these centrifugal forces, and in such a case, a larger cavity generally offers sufficient support.

Embodiments where blade 30 is thicker proximate platform 46 includes blades 30 with integral platform 46. As mentioned above in reference to FIG. 2A, platform 46 can either be integral with airfoil section 32, or it can be fabricated separately. An integral platform 46, such as in the example blade 30 shown in FIG. 2A and in FIGS. 3A-3C, makes blade 30 stronger proximate root 36 because of the greater thickness and uniformity of material in that location. This strength allows more material to be removed, enlarging that portion of cavity 54 and saving additional weight in blade 30. In some embodiments, these weight savings are offset by the added processing time and costs of more complex tooling and machining needed to produce hollow blade 30 with integral platform 46. Alternatively, a separate platform 46 simplifies tooling and machining of blade 30, including formation of cavity 54 and socket 52. Blade 30 alone is a much simpler shape to form and process than blade 30 with integral platform 46, reducing manufacturing costs.

Cavity 54 can also be increased in size proximate tip edge 48 to reduce centrifugal loads at platform 46. Reducing weight at the outer reaches of blade 30 translates into lower stress at its root end. While each figure depicts cavity 54 as proximate the center of blade 30, cavity 54 is not limited from extending all the way to tip edge 48. In embodiments where cavity 54 extends completely to at least a portion of tip edge 48, additional weight reduction is not only possible due to the larger size of cavity 54, this can also simplify processing of blade 30 and cover 50 by reducing the number of corners and edges. In these embodiments, cover 50 extends over that portion of tip edge 48 to enclose cavity 54 and retain filler 58. But as in all cases, the reduction in weight and simplified production must be balanced with the increased risk of foreign object damage from the lighter structure proximate tip edge 48.

Alternatively, cavity 54 can be reduced in the thickness and chordwise directions, enlarging the solid portion of blade 30 to optimize protection against a risk of damage via circumferential loading, such as from a lost blade or strong crosswinds. When engine 10 will be frequently operated in extreme weather conditions, or to provide additional assistance to the blade retention system, cavity 54 will not extend to tip edge 48. Alternatively, cavity 54 will also be made smaller in the chordwise and thickness directions, leaving more solid material and more protection proximate tip edge 48.

Relative dimensions of cavity 54 are also affected by the presence and arrangement of ribs 56. As noted above, ribs 56 provide internal reinforcement and redirection of various external forces on blade 30. As more reinforcement is provided by ribs 56 relative to the size of blade 30 the overall volume of cavity 54.

In addition to ribs 56, sheath 34 strengthens blade 30 by protecting and/or reinforcing a portion of airfoil portion 32. In the example shown, sheath 34 extends over leading edge 38 and a portion of airfoil 32 proximate leading edge 38. Here, sheath 34 protects areas on or proximate leading edge 38 including suction surface 42 and pressure surface 44. Of all the areas on blade 30, those areas proximate leading edge 38 are most susceptible to foreign object damage because leading edge 38 directs air into and through engine 10 over blade 30.

In the view shown, a forward edge of sheath 34 replaces leading edge 38 on airfoil 32 and becomes new leading edge 38 of blade 30. Sheath 34 here offers a degree of protection against large foreign object incursions by strengthening underlying airfoil 32 at leading edge 38. Sheath 34 also resists surface damage caused by smaller foreign objects. Damage from small foreign objects, including sand, rain, and small runway debris, can also be prevented or mitigated by the inclusion of erosion or corrosion resistant coatings on airfoil 32 and/or sheath 34.

In other embodiments, sheath 34 can alternatively be disposed on a different area on blade 30 to protect or reinforce other portions of airfoil 32. In yet other embodiments, blade 30 comprises more than one sheath 34. Sheath 34 is frequently included when the underlying material of airfoil 32 is of a lower density and strength than a typical material for airfoil 32.

For example, hollow metal blades are usually made from a titanium alloy. In one example, sheath 34 is at leading edge 38, airfoil portion 32 is formed from an aluminum alloy and sheath 34 is formed of a nickel or titanium alloy. In another example, the aluminum alloy is formed from a 7XXX-series alloy and sheath 34 is formed from a titanium alloy with aluminum and vanadium. In yet another example, sheath 34 is formed from Ti-6Al-4V.

In certain embodiments, sheath 34 is made from a high-strength metal or alloy, such as titanium or nickel, to reinforce or strengthen at least a portion of blade 30. An example of a fan blade having a protective sheath over a metal airfoil is described in our co-pending European Patent Application claiming priority of US 12/713867 entitled "Hybrid Metal Fan Blade," and filed on an even date herewith.

In one example, as shown in FIGS. 2A-2B and 3A-3C, sheath 34 covers leading edge 38 and a portion of both suction surface 42 and pressure surface 44. Alternatively, airfoil 32 and sheath 34 are formed of the same materials as the previous example, but sheath 34 is disposed over a different portion of airfoil 32, such as proximate platform 46. In that example, sheath 34 stiffens blade 30 to help it withstand centrifugal forces during operation of engine 10.

In yet another example, blade 30 does not include sheath 34. In this example, airfoil 32 is made from a titanium alloy. Some of these titanium alloys also include aluminum and vanadium. One group of such alloys includes Ti-6Al-4V alloys. Blades 30 made from such alloys typically see minimal additional reinforcement of leading edge sheath 34. However, even when airfoil portion 32 of blade 30 is made from a high-strength alloy such as one of the above example titanium alloys, sheath 34 can still be useful under a variety of conditions.

In the examples shown, sheath 34 provides reinforcement proximate leading edge 38 such that cavity 54 can be elongated in the chordwise direction or moved closer to leading edge 38. Other design and operational considerations can indicate that sheath 34 would be helpful in a different or additional location. If sheath 34 is not included, such as in the previous example of airfoil 32 being made of Ti-6Al-4V alloy, attachment surface 60 is also omitted from blade 30.

In one example, sheath 34 is bonded to airfoil 32 at surface 60 using an adhesive film, such as type EA9628 epoxy adhesive available from Henkel Corporation Hysol Division, Bay Point, Calif., or type AF163K epoxy adhesive available from 3M Adhesives, Coatings & Sealers Division, St. Paul, Minn. The film is disposed on sheath attachment surface 60 and/or the corresponding surface of sheath 34. The adhesive is then cured, such as by autoclave. However, in alternative embodiments, sheath 34 can be attached via linear friction welding, laser welding, or other techniques for metal-to-metal bonding known to those skilled in the art. In yet other embodiments, sheath 34 can be formed directly on airfoil 32, such as by electroforming.

After bonding of cover 50 and sheath 34, hollow blade 30 is substantially completed. After finish processing, blade 30 is the version seen in FIG. 2A. Due to the separate parts and the potential for variation in processing of airfoil 32 and sheath 34, blade 30 is particularly susceptible to sudden elevation changes and gaps once sheath 34 and cover 50 are joined. As part of finish processing, surfaces 42 and 44 are processed to remove sudden elevation changes, remove gaps, and form desired aerodynamic shapes. Erosion and/or corrosion resistant coatings can also be added at this time to both assist in evening out the various surfaces and to prevent damage from environmental factors, extending the serviceable life of blade 30.

Leading edge 38, trailing edge 40, platform 46, and tip edge 48 are also processed to achieve the proper aerodynamic shapes. This processing can occur, for example, via machining. As is known in the art, hollow blades 30 are typically processed, for example, by heating and twisting, to form the final desired airfoil shape of blade 30. However, the adhesive bonding process allows airfoil 32, sheath 34, and cover 50 to be manufactured into a very close approximation of their final shape. Thus, all that is usually required after integration of sheath 34 and cavity cover 50 is final machining. Blade 30 now has sufficient performance and resiliency and is made according to less expensive and complicated process.

The high costs and relatively low efficiency gains seen in current hollow metal blade designs thus discourage manufacturers of small- to mid-sized engines from incorporating hollow blades into their designs. Larger hollow blades can offer sufficient strength and resiliency with proper design. Smaller hollow blades also can see improvements in efficiency and withstand incursions with proper design. However, small hollow metal blades are relatively expensive to process, typically erasing any raw material or efficiency savings seen from adding a cavity.

Current versions of hollow metal blades are generally cost-effective in engines with overall diameters exceeding about 140-152 cm (55-60 inches). With the lower costs and complexity of producing hollow blade 30, they are more cost-effective in small- to mid-sized engines as overall diameters approach about 101-127 cm (40-50 inches). Refining of the steps described herein, as well as advancements in material science and processing techniques will inevitably push this threshold toward even smaller engines.

Finally, FIG. 4 is a flowchart depicting the above-described steps to make blade 30 as shown in FIGS. 3A-3C. Method 100 comprises five steps 102, 104 106, 108, and 110. Step 102 involves forming airfoil blank 32, protective sheath 34, and cavity cover 50 as shown and described with respect to FIG. 3A. Step 104 describes forming socket 52, cavity 54, ribs 56, and sheath attachment surface 60 into airfoil portion 32 as shown and described with respect to FIG. 3B. Step 106 lists preparing the appropriate surfaces for bonding as described above in reference to FIGS. 3B and 3C. Step 108 shows engaging of cavity cover 50 into socket 52, and adhesively bonding it to airfoil portion 32. Step 108 also includes the step of bonding sheath 34 at surface 60, as shown and described with respect to FIG. 3C. Step 110 completes method 100 with final machining of the edges and surfaces to form blade 30 as seen in FIG. 2A.

Hollow titanium blades 30 have frequently been made using a diffusion bonding process where two titanium sheets are superplastically joined at leading edge 38 and trailing edge 40 as well as at platform 46 and tip edge 48. This process was originally adapted to create a uniform microstructure so as to reduce stress concentrators, grain boundaries, weak points, and brittleness at material junctions otherwise caused by typical welding or casting processes. However, diffusion bonding is expensive and complex compared to more conventional techniques. Further, it is unsuitable for many types of blades 30, such as where airfoil 32 is formed from an aluminum or other lightweight alloy having low phase transition temperatures.

Hollow blade 30 can be conventionally processed according to method 100 while minimizing stress concentrators and brittleness throughout blade 30. Step 102 includes the step of forming a blank for airfoil portion 32, sheath 34, and cavity cover 50. One example method of forming airfoil 32 includes forging. Forging is a relatively inexpensive process where a metal workpiece is heated and placed between two or more dies to form the desired shape. For example, a blank can be placed in a closed compression die causing the metal to flow into the general desired shape of airfoil portion 32.

In addition to airfoil 32, a blank of cavity cover 50 is formed, for example, via forging. Cover 50 can alternatively be formed via any other traditional process so long as it does not introduce brittleness or undesired phase transitions into blade 30. If airfoil portion 32 and cover 50 are made from the same material, cover 50 can be readily and cost-effectively forged at the same time as airfoil portion 32 in the same facility.

In certain embodiments, sheath 34 is formed from a different metallic material than airfoil 32 and cover 50. Sheath 34 can be formed by any suitable process or combination of processes, such as forging, casting, machining, electroforming, and diffusion bonding. In cases where sheath 34 is electroformed or diffusion bonded directly onto surface 60, step 104 can be combined with the adaptation described in step 106 and the bonding in step 108, but only with respect to sheath 34. In that event, steps 106 and 108 still require adaptation of socket 52 and bonding of cover 50. However, for sheath 34, such as that seen in FIG. 2B, a combination of forging and machining is sufficient.

Step 104 includes forming socket 52, cavity 54, support ribs 56 and sheath attachment surface 60. To form socket 52, an opening is formed on suction surface 42. Material is then removed from the interior of blade 30 between suction surface 42 and pressure surface 44, defining cavity 54. This can be done, for example, by machining. One example structure for socket 52 is lap section 62A as described above. Complementary structures, such as lap section 62B, are formed on cover 50 if necessary.

Internal support ribs 56 are formed, for example, as an integral part of blade 30 and cavity 54. This is done by removing material (e.g., by machining) from airfoil portion 32 in cavity 54. Machining of ribs 56 can be done by a milling machine performing a series of separated plunge cuts when forming cavity 54, leaving behind ribs 56. As noted above, ribs 56 need not be substantially parallel, but rather are arranged in any pattern designed to provide structural support and desired reinforcement within cavity 54 based on anticipated operating conditions. As in the above example, ribs 56 can be machined from airfoil 32 during formation of cavity 54. Alternatively, they are formed separately and bonded within cavity 54. Ribs 56 are not limited to being formed entirely within cavity 54. Alternatively, .all or a portion of ribs 56 can be formed on the cavity facing surface of cover 50.

Sheath attachment surface 60 is formed by removing material from the location on airfoil portion 32 where sheath 34 will be located. In the examples shown in FIGS. 2A-2B and 3A-3C, material is removed to form recessed portions on suction surface 42 and pressure surface 44 proximate leading edge 38. These recessed portions formed after material removal comprise attachment surface 60. The material can be removed, for example, by machining. In examples where sheath 34 is to be located elsewhere on blade 30, material is alternatively removed from corresponding portions of airfoil 32.

Machining of socket 52, cavity 54, ribs 56, attachment surface 60, and lap section 62A can be done on airfoil portion 32 by a single piece of milling equipment. In many embodiments, a standard computer-controlled, five-axis milling machine is adequate to produce these elements a blade 30 and can be integrated as a single milling for airfoil 32, cover 50, and sheath 34.

Step 106 includes preparing surfaces for bonding. Depending on the chosen bonding material, design requirements, and the prior processing steps, several surfaces can require additional processing to form textures conducive to bonding. Texturing and cleaning bonding areas of cover 50 and socket 52, as well as sheath 34 and attachment surface 60 can provide additional surface area and improved bonding ability between these pieces.

Examples of typical preparation steps include chemical cleaning, fine machining, and other surface preparation dictated by chosen adhesive 64. Preparing the surfaces for bonding also includes placement of filler material 58 within cavity 54 to provide additional bonding surface. If there is no sheath 34, the parts of step 106 involving sheath 34 and surface 58 are omitted.

Machining is a relatively low-cost method of forming socket 52, cavity 54, ribs 56, attachment surface 60, and lap sections 62A and 62B. Machining, such as on a widely available five-axis milling machine, allows for sufficiently tight tolerances, ensuring substantial completion of blade 30 upon engagement and bonding of sheath 34 and cover 50 (described below). When combined, these components form a substantially flush suction surface 42 and pressure surface 44, as well as continuous leading edge 38, trailing edge 40, platform 46, and tip edge 48. In certain embodiments, finish machining, as in the example described below, will be unnecessary if airfoil 32, sheath 34, and cover 50 are machined to tolerances such that they combine to form blade 30 with sufficiently uniform surfaces and minimal gaps.

Step 108 includes engaging and bonding cover 50 and sheath 34 to airfoil portion 32. Socket 52 is adapted to engage with cover 50. Bonding can be done by any suitable means, but several epoxy and polyurethane adhesives are sufficient as described above. If sheath placement surface 60 is included, cover 50 is bonded to surface 60 as well. Various types of adhesive are described in detail above. Bonding of sheath 34 can be done using the same process as is done for cover 50, such as by applying and curing an adhesive film between the joined parts. Alternatively, sheath 34 is bonded via linear friction welding or laser welding. In some embodiments, sheath 34 has already been electroformed or diffusion bonded directly to airfoil 32 during step 102 as described above.

Step 110 includes final processing of blade 30 once sheath 34 and cover 50 have been integrated into blade 30 during step 108. Step 110 involves, for example, a final machining step to remove sudden elevation changes and gaps in blade 30. Step 110 also involves forming the desired aerodynamic shapes on leading edge 38, trailing edge 40, suction surface 42, pressure surface 44, platform 46, and tip edge 48, also by machining.

Machining and adhesive bonding airfoil 32, sheath 34, and cover 50 substantially into their final shapes prior to bonding can eliminate the usual twisting of blade 30 under elevated temperatures to impart a final airfoil shape to blade 30. Excessive heating and twisting of blade 30 can cause adhesive 64 to fail and cover 50 to be ejected. If these components are formed nearly into their final shapes and bonding is successful, only final machining is required. In certain embodiments, the components are machined prior to bonding such that major surfaces of blade 30 have minimal elevation changes and gaps, making finish machining unnecessary.

The application of corrosion and erosion resistant coatings to the sheath and airfoil surfaces also assists in smoothing any gaps or evening out undesired elevation changes. Addition of such coatings to airfoil 32, sheath 34, and/or cover 50 also helps to reduce damage otherwise caused by continuous bombardment of blade 30 with sand, rain, and small runway debris. Erosion resistant coatings can prevent these and other small foreign objects from reaching the metal surfaces of airfoil 32 and sheath 34, hindering formation of small nicks and dings. Corrosion resistant coatings prevent the spread of oxidation outside of areas that have been damaged despite other protective measures.

A combination of forging, machining, and adhesive bonding, as described in the examples for FIG. 4, significantly reduces processing time and costs of blades 30. The machining can be integrated in virtually any factory currently equipped with five-axis milling capabilities. Forging can be done on site or forged blanks can be shipped in bulk to the mill. Bonding also can take place on site, or the parts can be shipped and bonded at a separate location or the location where blades 30 will be assembled. Since this process can be adapted for virtually any hollow metal blade, implementation of this process across several product lines can significantly reduce a manufacturer's costs and increase reliability of hollow blades 30.

The description above includes several example embodiments. However, several variations are possible. As described above, cavity 54 is formed out of an opening in suction surface 42. This is in part because the negative pressure tends to hold cover 50 in place over cavity 54 against a combination of one or more of socket 52, ribs 56, and filler 58. The negative pressure on suction surface 42 generally maintains adhesive 64 under a degree of compression during operation, which reduces the likelihood that bonding of cover 50 weaken or fail.

However, cavity 54 is not limited to suction surfaces 42. Other design or efficiency considerations, such as these discussed earlier, can indicate that placement of socket 52 and cavity cover 50 on pressure surface 44 is more beneficial. In that case, the invention can easily be adapted to integrate socket 52 of cover 50 with the opposing surface.

It should also be noted that, while titanium is the benchmark material for turbine airfoils, this disclosure is not at all limited to hollow titanium or titanium alloys, nor is it necessarily limited to airfoils turbo fan engines. Several examples include airfoil 32 as being formed from an aluminum alloy, such as one in the 7XXX series. Other lightweight alloys are also appropriate for hollow blade 30, provided that the finished engine 10 meets the appropriate regulations for its location and type of service. Any hollow fan, compressor, or turbine blade can be created with any suitable metallic material.

While the invention has been described with reference to exemplary embodiments, it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A blade (30) comprising:
a root (36);
an airfoil (32) connected to the root and formed from a first metallic material having first (42) and second (44) major surfaces, the first metallic material being an aluminum alloy;
an internal cavity (54) with an opening formed only in the first major surface;
a plurality of ribs (56) extending through a depth of the cavity;
metallic foam filler (58) disposed through the depth of the cavity;
a socket (52) formed around the opening;
a metallic cover (50) received in the socket and covering the opening to enclose the cavity, the plurality of ribs and the metallic foam filler; and
an adhesive (64) bonding the cover to the socket, the plurality of ribs and the metallic foam filler;
**characterised in that**
the adhesive (64) is polyurethane-based to provide force damping between the cover and the airfoil (32).

2. The blade of claim 1, wherein a volume of the cavity is between about 30% and about 70% of a total volume of the blade; preferably wherein a volume of the cavity is between about 40% and about 60% of a total volume of the blade.

3. The blade of claim 1 or 2, wherein a thickness of the cover is between about 15% and about 35% of a maximum thickness of the blade; preferably wherein a thickness of the cover is between about 20% and about 30% of a maximum thickness of the blade.

4. The blade of any preceding claim, further comprising a sheath (34) formed from a second metallic material and covering a portion (60) of the airfoil; preferably wherein the sheath covers substantially all of the leading edge (38), a portion of the first surface, and a portion of the second surface.

5. The blade of claim 4, wherein the second metallic material is a titanium or nickel alloy.

6. The blade of claim 4 or 5, wherein the second metallic material is Ti-6Al-4V.

7. The blade of any preceding claim, wherein the first metallic material is a 7XXX-series aluminum alloy.

8. A method of making a blade (30), the method comprising:
forming a solid airfoil (32) and a cover (50) from a first metallic material, wherein the first metallic material is an aluminium alloy;
forming an opening, a socket (52), and a cavity (54) in a first major surface (42) of the airfoil;
forming a plurality of ribs (56) extending through a depth of the cavity;
filling a depth of the cavity with metallic foam filler (58);
adhesively bonding (64) the cover to the socket, the plurality of ribs and the metallic foam filler, thereby enclosing the cavity, the plurality of ribs and the metallic foam filler within the airfoil,
wherein the adhesive bonding uses a polyurethane-based adhesive to provide force damping between the cover and the airfoil; and
machining the airfoil into a final blade shape.

9. The method of claim 8, further comprising the steps of:
removing material from the airfoil to create a recessed portion; and
bonding a sheath (34) to the recessed portion (60);
wherein the sheath is formed from a second metallic material; and
wherein the second metallic material is a titanium or nickel alloy.

10. The method of claim 9, wherein the second metallic material is Ti-6Al-4V.

11. The method of claim 8, 9 or 10, wherein the first metallic material is a 7XXX-series aluminum alloy.

## Patentansprüche

1. Schaufel (30), umfassend:
einen Schaufelfuß (36);
eine Tragfläche (32), die mit dem Schaufelfuß verbunden und aus einem ersten metallischen Material geformt ist, das eine erste (42) und zweite (44) Hauptoberfläche aufweist, wobei das erste metallische Material eine Aluminiumlegierung ist;
einen inneren Hohlraum (54) mit einer nur in der ersten Hauptoberfläche geformten Öffnung;
eine Vielzahl an Rippen (56), die durch eine Tiefe des Hohlraums verlaufen;
metallischen Schaumfüller (58), der in der Tiefe des Hohlraums verteilt ist;
eine um die Öffnung geformte Fassung (52);
eine metallische Abdeckung (50), die in der Fassung aufgenommen wird und die Öffnung
abdeckt, um den Hohlraum, die Vielzahl an Rippen und den metallischen Schaumfüller einzuschließen, und
einen Klebstoff (64), der die Abdeckung an die Fassung, die Vielzahl an Rippen und den metallischen Schaumfüller bindet;
**dadurch gekennzeichnet, dass**
der Klebstoff (64) polyurethanbasiert ist, um Dämpfungskraft zwischen der Abdeckung und der Tragfläche (32) bereitzustellen.

2. Schaufel nach Anspruch 1, wobei ein Volumen des Hohlraums zwischen circa 30 % und circa 70 % eines Gesamtvolumens der Schaufel entspricht; wobei vorzugsweise ein Volumen des Hohlraums zwischen circa 40 % und circa 60 % eines Gesamtvolumens der Schaufel entspricht.

3. Schaufel nach Anspruch 1 oder 2, wobei eine Dicke der Abdeckung zwischen circa 15 % und circa 35 % einer maximalen Dicke der Schaufel entspricht; wobei vorzugsweise eine Dicke der Abdeckung zwischen circa 20 % und circa 30 % einer maximalen Dicke der Schaufel entspricht.

4. Schaufel nach einem der vorangehenden Ansprüche, außerdem eine aus einem zweiten metallischen Material geformte Umhüllung (34) umfassend, welche einen Teil (60) der Tragfläche bedeckt; wobei die Umhüllung vorzugsweise im Wesentlichen die gesamte Vorderkante (38), einen Teil der ersten Oberfläche und einen Teil der zweiten Oberfläche überdeckt.

5. Schaufel nach Anspruch 4, wobei das zweite metallische Material eine Titan- oder Nickellegierung ist.

6. Schaufel nach Anspruch 4 oder 5, wobei das zweite metallische Material Ti-6Al-4V ist.

7. Schaufel nach einem der vorangehenden Ansprüche, wobei das erste metallische Material eine 7XXX-Aluminiumlegierung ist.

8. Ein Verfahren zur Herstellung einer Schaufel (30), wobei das Verfahren Folgendes umfasst:
das Formen einer soliden Tragfläche (32) und einer Abdeckung (50) aus einem ersten metallischen Material,
wobei das erste metallische Material eine Aluminiumlegierung ist;
das Formen einer Öffnung, einer Fassung (52) und eines Hohlraums (54) in der ersten Hauptoberfläche (42) der Tragfläche;
das Formen einer Vielzahl an Rippen (56) die durch eine Tiefe des Hohlraums verlaufen;
das Füllen einer Tiefe des Hohlraums mit metallischem Schaumfüller (58);
das Verbinden (64) der Abdeckung mit der Fassung, der Vielzahl an Rippen und dem metallischen Schaumfüller, wodurch der Hohlraum, die Vielzahl an Rippen und der metallische Schaumfüller in der Tragfläche eingeschlossen werden,
wobei bei dem Verbinden ein polyurethanbasierter Klebstoff verwendet wird, um Dämpfungskraft zwischen der Abdeckung und der Tragfläche bereitzustellen; und das maschinelle Bearbeiten der Tragfläche zur Formung der endgültigen Schaufelform.

9. Verfahren nach Anspruch 8, ferner folgende Schritte umfassend:
das Entfernen von Material von der Tragfläche, um einen vertieften Abschnitt zu schaffen; und
die Bindung (34) einer Umhüllung an den vertieften Abschnitt (60);
wobei die Umhüllung aus einem zweiten metallischen Material geformt ist; und
wobei das zweite metallische Material eine Titan- oder Nickellegierung ist.

10. Verfahren nach Anspruch 9, wobei das zweite metallische Material Ti-6Al-4V ist.

11. Verfahren nach Anspruch 8, 9 oder 10, wobei das erste metallische Material eine 7XXX-Aluminiumlegierung ist.

## Revendications

1. Aube (30) comprenant:
une embase (36);
un profilé (32) raccordé à l'embase et constitué d'un premier matériau métallique comportant de première (42) et deuxième (44) surfaces majeures, le premier matériau métallique étant un alliage en aluminium;
une cavité interne (54) dotée d'une ouverture formée uniquement dans la première surface majeure;
une pluralité de nervures (56) s'étendant à travers une profondeur de la cavité;
une charge de mousse métallique (58) disposée à travers la profondeur de la cavité;
une emboîture (52) formée autour de l'ouverture;
un couvercle métallique (50) reçu dans l'emboîture et couvrant l'ouverture pour confiner la cavité, la pluralité de nervures et la charge de mousse métallique; et
un adhésif (64) reliant le couvercle et l'emboîture, la pluralité de nervures et la charge de mousse métallique;
**caractérisé en ce que** l'adhésif (64) est à base de polyuréthane pour produire un amortissement de forces entre le couvercle et le profilé (32).

2. Aube selon la revendication 1, dont un volume de la cavité est compris entre environ 30 % et environ 70 % d'un volume total de l'aube; un volume de la cavité étant de préférence compris entre environ 40 % et environ 60 % d'un volume totale de l'aube.

3. Aube selon la revendication 1 ou 2, dont une épaisseur du couvercle est comprise entre environ 15 % et environ 35 % d'une épaisseur maximale de l'aube; une épaisseur du couvercle étant de préférence comprise entre environ 20 % et environ 30 % d'une épaisseur maximale de l'aube.

4. Aube selon l'une quelconque des revendications précédentes, comprenant en outre une gaine (34) formée d'un deuxième matériau métallique et couvrant une partie (60) du profilé; où de préférence la gaine recouvre sensiblement l'ensemble du bord d'attaque (38), une partie de la première surface et une partie de la deuxième surface.

5. Aube selon la revendication 4, dont le deuxième matériau métallique est un alliage à base de titane ou de nickel.

6. Aube selon la revendication 4 ou 5, dont le deuxième matériau métallique est Ti-6 Al-4 V.

7. Aube selon l'une quelconque des revendications précédentes, dont le premier matériau métallique est un alliage métallique de la série 7XXX.

8. Procédé de fabrication d'une aube (30), ce procédé comprenant:
la formation d'un profilé solide (32) et d'un couvercle (50) à partir d'un premier matériau métallique, le premier matériau métallique étant un alliage d'aluminium;
la formation d'une ouverture, d'une emboîture (52) et d'une cavité (54) dans une première surface majeure (42) du profilé;
la formation d'un ensemble de nervures (56) s'étendant à travers une certaine profondeur de la cavité;
le remplissage d'une certaine profondeur de la cavité par une charge de mousse métallique (58);
la liaison par adhésion (64) du couvercle à l'emboîture, à la pluralité de nervures et à la charge de mousse métallique, ce qui confine la cavité, l'ensemble de nervures et la charge de mousse métallique dans le profilé,
la liaison par adhésion utilisant un adhésif à base de polyuréthane pour obtenir un amortissement des forces entre le couvercle et le profilé; et
l'usinage du profilé sous une forme finale d'aube.

9. Procédé selon la revendication 8, comprenant en outre les étapes suivantes:
retrait de matière du profilé pour créer une partie évidée; et
adhésion d'une gaine (34) à la partie évidée (60);
la gaine étant formée d'un deuxième matériau métallique; et
le deuxième matériau métallique étant un alliage à base de titane ou de nickel.

10. Procédé selon la revendication 9, dans lequel le deuxième matériau métallique est Ti-6 Al-4 V.

11. Procédé selon la revendication 8, 9 ou 10, dans lequel le premier matériau métallique est un alliage d'aluminium de la série 7XXX.
